# EUROPEAN PATENT APPLICATION

(11) **EP 2 114 061 A1**
(43) Date of publication of application: **04.11.2009**
(21) Application number: 08252741.7
(22) Date of filing: 19.08.2008
(51) Int. Cl.: H04M 11/00

(54) **Entryway communications system**

(30) Priority: 03.05.2008 US 41420
(71) Applicant: Avaya Inc., Basking Ridge, New Jersey 07920 (US)
(72) Inventor: Mohler, David, Arvada CO 80005 (US)
(74) Representative: Williams, David John

(57) **Abstract**

A premises entryway communications device and system enable a visitor to the premises and an occupant of the premises to communicate via icons and text.

## Description

### Technical Field

This invention relates to generally to electronic communications systems, and specifically to intercom systems.

### Background of the Invention

A drop-by visitor to an office, a business, or other premises, may find the office door closed or the business door locked. The visitor is thus discouraged or prevented from communicating face-to-face with the occupant(s) of the office or business. Use of administrative assistants, security guards, identification card readers, office-hour signs, notes on doors indicating the status of the occupant, intercom systems, and the like, or even knocking by the visitor, ameliorate the problem somewhat. A better solution is for the visitor to call or instant-message the occupant(s), e.g., on the visitor's cell phone. But this results in a real-time two way communication only if the occupant is willing to be interrupted by the call and answer it immediately, as opposed to allowing the call to go to voice mail.

### Summary of the Invention

According to one aspect of the invention, there is provided an entryway communication client device or system that enables a visitor to a premises to communicate with an occupant of the premises in real time, but in a way that is less intrusive than face-to-face communications such as voice communications - namely, via visual communications such as icons and text. The client device is located in proximity to the entryway to the premises, and comprises a user-interface and a display screen. The client device is connected, or adapted for connection, to a communication server that implements a presence service for the occupant and provides presence information about the occupant to the device. The device displays the provided presence information on its display screen and provides information entered by the visitor via its user interface to the server. The server displays the entered information to the occupant.

This manner of communicating with the visitor is much less intrusive on and disruptive to the occupant than a voice communication.
Hence, there may be no situation, except for the occupant not being present on the premises, where as little (none) communication occurs as if the visitor were to knock on the entryway and receive no answer. Consequently, the visitor's visit is not in vain even if the visitor does not get to speak with the occupant.

The invention may be implemented both as a method and an apparatus, as well as a computer-readable medium containing instructions which, when executed by a computer, cause the computer to perform the method.

### Brief Description of the Drawing

These and other features and advantages of the invention will become more apparent from considering the following description of an illustrative embodiment of the invention together with the drawing, in which:
Fig. 1 shows premises that include an illustrative embodiment of the invention;
Fig. 2 is a block diagram of a client device of the premises of Fig. 1;
Fig. 3 is a block diagram of a server of the premises of Fig. 1;
Fig. 4 shows an illustrative image displayed by the client device of Fig. 2;
Fig. 5 shows an illustrative image displayed by the server of Fig. 3; and
Fig. 6 is a flowchart showing illustrative use of an entryway communication system of the premises of Fig. 1.

### Detailed Description

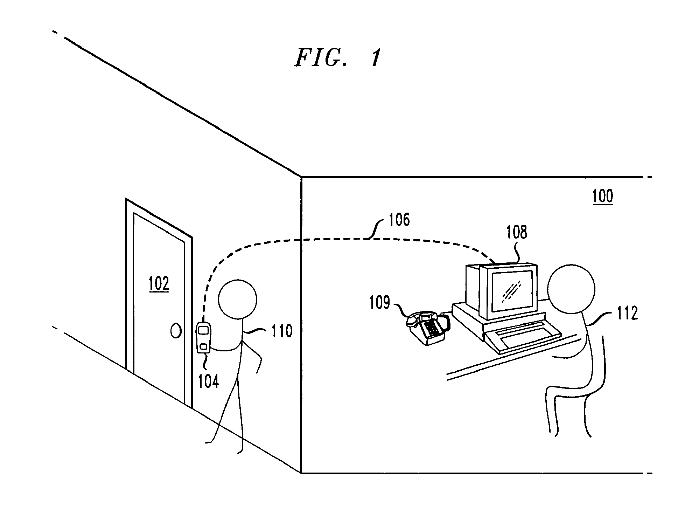

Fig. 1 shows premises **100** equipped with a communications system that comprises a client device **104** located near an entryway **102** to premises **100** and connected to a server **108.** Premises **100** may be any desired premises, such as an individual office, a business, a residence, etc. If entryway **102** is an outdoor entrance, device **104** is weather-proofed. When a visitor **110** drops by premises **100** intending to speak with occupant **112** of premises **100,** but finds entrance **102** to be closed or locked, visitor **110** uses device **104** to find out the status ("presence") of occupant **112** and to appraise occupant **112** of the physical presence of visitor **110** at entrance **102** and of the purpose of the visitor's visit.

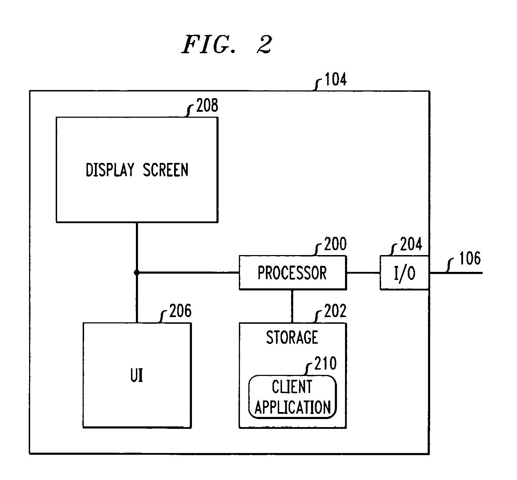

Connection **106** is any desired wired or wireless communications connection. For example, connection **106** may be an instant messaging (IM) connection. Device **104** is shown in more detail in Fig. 2. It is illustratively a stored-program controlled device comprising storage **202** for storing programs **210** and data, a processor **200** for executing programs from storage **202,** an input/output (I/O) **204** such as a communications port for communicatively connecting device **104** to server **108** via connection **106,** a display screen **208,** and a user interface (UI) **206** such as a keyboard, a touch-sensitive screen, and/or a point-and-click device. For example, device **104** may comprise a cellular telephone, a personal digital assistant (PDA), or a tablet personal computer. Device **104** may be mounted on a wall of premises **100.**

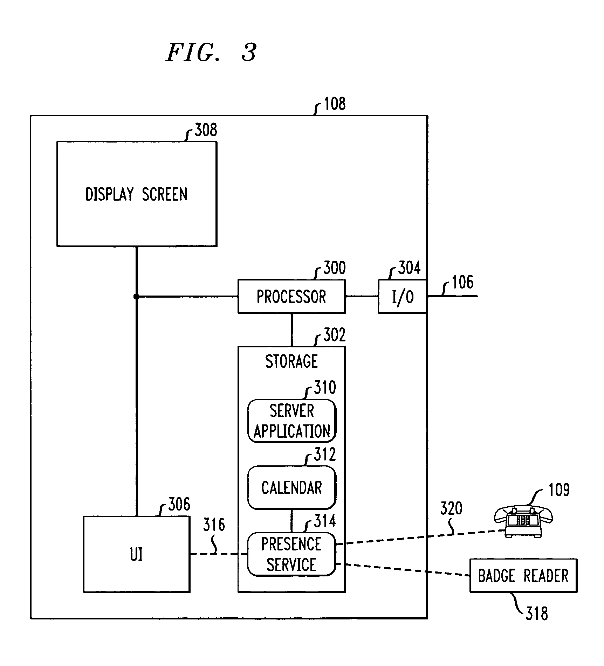

Server **108** is shown in more detail in Fig. 3. Server **108** is likewise a stored-program controlled device that comprises storage **302** for storing programs **310-314** and data, a processor **300** for executing programs from storage **302,** an input/output (IO) **304** for connecting server **108** to connection **106,** a display screen **308,** and user interface (UI) **306.** For example, server **108** may be a personal computer or a workstation of occupant **112.** Alternatively, server **108** may comprise a user device akin to device **104** and a separate host computer that interfaces the two user devices. Server **108** implements a conventional presence service **314** for occupant **112.** For this purpose, server **108** has access to sources of presence information regarding occupant **112,** such as the occupant's on-line calendar **312,** current telephone-status source **320,** current personal-computer-status source **316,** on-premises badge reader **318,** etc. Additionally, occupant **112** may manually enter their presence status into server **108.** The manual entry may either override or supplement the presence status that is automatically determined by the presence service **314.** Presence service **314** creates and maintains a presentity representing occupant **112,** and device **104** is subscribed as a watcher to the presentity, in a conventional manner.

If premises **100** are shared by a plurality of occupants **112,** server **108** provides a presence service **314** for each occupant **112,** and device **104** indicates the presence of whichever occupant **112** is selected by visitor **110** through interaction with device **104.**

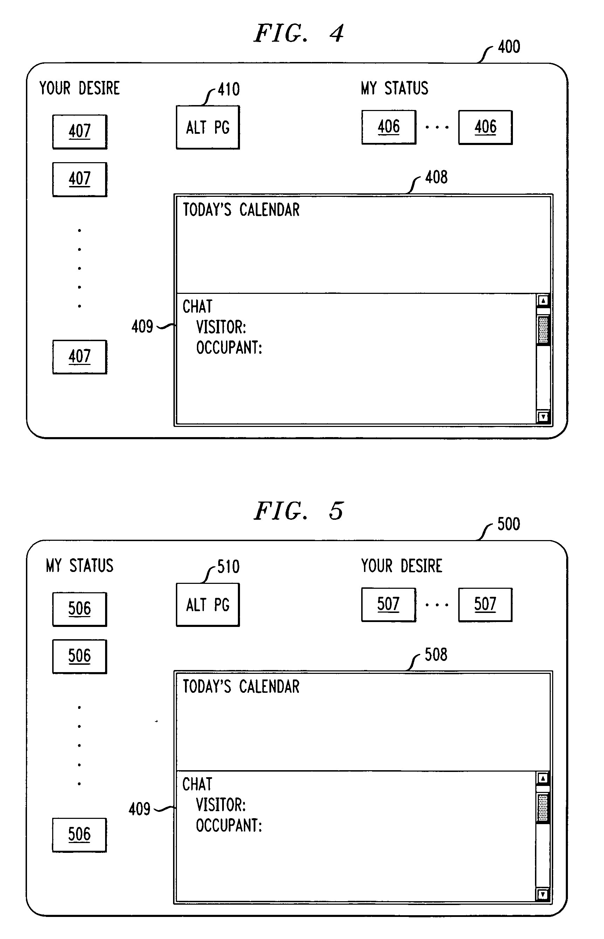

Fig. 4 shows a sample image **400** that is displayed on display screen **208** of device **104** according to one aspect of the invention. Image **400** presents one or more status icons **406** that represent current presence status of occupant **112,** a plurality of task icons **407** that represent tasks that a visitor **110** may select, a calendar field **408** that shows calendar entries of occupant **112,** a text field **409** that presents a chat interface between visitor **110** and occupant **112** showing the visitor's text entries and the occupant's text responses, and an "alternative page" icon **410** the selection of which by visitor **110** causes alternative pages or child views to be displayed as images on display screen **208.** The location of icons **406, 407,** and **410** and of fields **408** and **409** on display screen **208** is not important -- they may be located anywhere as desired. Icons **406, 407,** and **410** may be elaborated or simplified depending on cost, context (e.g., type of business, number of occupants, etc.), or other factors (type of applications for calendar, presence, etc.). Calendar field **408** shows a simplified -- sanitized -- version of the occupant's calendar, such as merely indicating a time and whether the occupant is "busy-in office", "busy-out of office", or "free" at that time, without giving details. Status icons **406** may represent status such as "do not disturb", "knock and come in", "on phone", "in a meeting", "please wait", "time delay", "pick a time to meet", etc. Task icons **407** may represent tasks such as "Can we talk?", "Amount of time needed?", "We have a scheduled meetingshall we postpone?", "criticality of visit", "topic(s)", "visitor's identity", "business or personal visit", "let's chat", etc. Other icons **407** may be specific to particular premises **100,** such as to a residence or to a type of business being conducted on premises **100.** Some icons **406** and **407** may come pre-programmed as generally-useful icons, while other icons **406, 407** may be created by occupant **112** to customize image **400** to the occupant's particular needs.

Substantially the same image **500** is illustratively presented to occupant **112** on server **108,** as shown in Fig. 5, but with icons **407** and **408** reversed, such that icons **506** show all icons **406** selectable by occupant **112,** and icons **507** shown icons **407** selected by visitor **110.** Furthermore, image **500** may show the occupant's full calendar **508,** as opposed to the sanitized version **408** thereof. When a visitor **110** begins to use device **104,** an alerting icon such as a small version of image **500** may pop up on a display screen **308** of server **108** to alert occupant **112** to the visitor's presence. When occupant **112** selects that alerting icon, a full-size version of image **500** is displayed to occupant **112.**

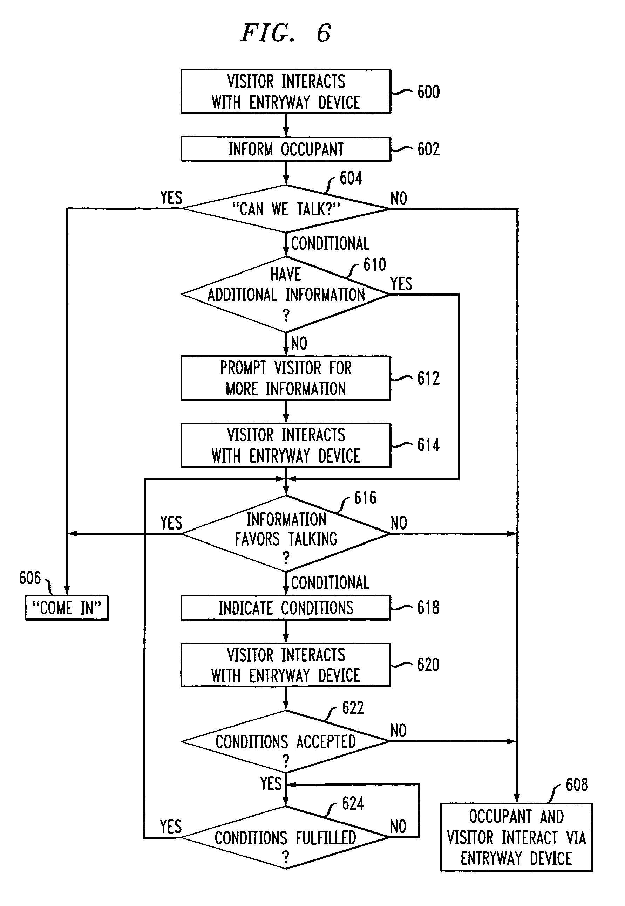

Fig. 6 illustrates use of the communication system of premises **100.** When visitor **110** arrives at premises **100** and first interacts with device **104,** such as by selecting one or more icons **407** or entering text in chat field **409,** at step **600,** occupant **112** is notified and presented with the visitor's input, at step **602.** For example, a pop-up is displayed to occupant **112** on display screen **308** of server **108,** and when occupant **112** selects the pop-up, server **108** displays image **500** highlighting the selected icon(s) **407** or showing the inputted text. At step **604,** occupant **112** determines if visitor **110** selected "Can we talk?" icon **407** or inputted similar text. If so, and if occupant **112** decides to talk to the visitor **110** at this time, occupant **112** selects a "come in" icon **506** in image **500.** This icon **506** is displayed to visitor **110** as an icon **406** in image **400** on device **104,** at step **606.** If visitor **110** selected "Can we talk?" icon **407** or inputted similar text but occupant **112** decides not to talk to visitor **110** at this time, or if visitor **110** did not select "Can we talk?" icon **407** and did not input similar text, visitor **110** and occupant **112** interact via device **104** (and server **108),** at step **608,** to, for example, schedule a meeting, arrange a drop-back time, or answer the visitor's question. If visitor **110** selected "Can we talk?" icon **407** or inputted similar text, but occupant **112** has not yet decided whether or not to talk to visitor **110,** occupant **112** considers other information that visitor **110** may have provided, such as other icons **407** selected by visitor **110** or textual information input by visitor **110,** to determine whether or not to meet with visitor **110,** at step **616.** For example, occupant **112** may need to ascertain the topic of desired conversation, the amount of time needed for the conversation, and the criticality of the subject, before deciding whether or not to talk to visitor **110.** If visitor **110** did not provide sufficient additional information, as determined at step **610,** occupant **112** prompts visitor **110** via device **104** to provide the additional information, at step **612,** and visitor does so via device **104,** at step **614.** If occupant **112** determines at step **616** that the additional information, such as the time, topic, and/or criticality, favor talking to the visitor, occupant **112** invites visitor **110** to come in, at step **606.** If talking is not favored at step **616,** occupant **112** and visitor **110** proceed to interact via device **104,** at step **608.** If occupant **112** is conditionally willing to talk to visitor **110,** occupant **112** indicates the conditions to visitor **110,** at step **618.** A condition may be, for example, "Can you wait five minutes?". Visitor **110** responds to the conditions via device **104,** at step **620.** If visitor **110** does not accept the conditions, as determined at step **622,** the interaction of occupant **112** and visitor **110** proceeds to step **608.** If visitor **110** accepts the conditions, as determined at step **622,** and when the conditions are fulfilled, as determined at step **624,** occupant **112** returns to step **616** to determine if anything has changed in the meantime, e.g., has a critical phone call arrived, to change the occupant's decision to meet with visitor **110.** If nothing has changed, occupant **112** proceeds to step **606** to meet with visitor **110.**

Of course, various changes and modifications to the illustrative embodiment described above will be apparent to those skilled in the art. For example, device **104** may be supplemented with a camera or a biometric detector that helps occupant **112** ensure that visitor **110** is who they say they are. Or, device **104** could be a PDA or other device that user **110** might carry with them, and when user **110** arrives at the door, they could be signaled via a tone or vibration that a user interface is available for load to their device via IRDA port or equivalent. Another variation is that an IRDA port could be resident on device **104** that could in turn transmit a future meeting to the user's device (PDA or similar) via the IRDA port. These changes and modifications can be made without departing from the spirit and the scope of the invention and without diminishing its attendant advantages. It is therefore intended that such changes and modifications be covered by the following claims except insofar as limited by the prior art.

## Claims

1. An apparatus comprising:
a communications device having a display screen and a user interface, the device being adapted for mounting in proximity to an entryway to a premises and for connection to a communications link, the device being adapted to respond to receipt via the communications link of presence information about an occupant of the premises by displaying the presence information on the display screen, and further being adapted to respond to entry of information via the user interface by a visitor of the premises by providing the entered information via the communications link for displaying to the occupant.

2. The apparatus of claim 1 wherein:
the presence information comprises at least one of whether the occupant is present on the premises, whether the occupant is busy or free, whether the occupant may or may not be disturbed, and calendar information of the occupant.

3. The apparatus of claim 2 wherein:
the device is adapted to display the presence information to the visitor via at least one of icons, an on-line text chat field, and a calendar display field.

4. The apparatus of claim 3 wherein:
the icons comprise icons selected by the occupant for display to the visitor.

5. The apparatus of claim 1 wherein:
the information entered by the visitor comprises at least one of an identity of the visitor, a purpose of the visit, and a type of interaction with the occupant desired by the visitor.

6. The apparatus of claim 5 wherein:
the device is adapted to transmit the entered information to a display of the occupant.

7. The apparatus of claim 5 wherein:
the icons comprise icons selected by the visitor for display to the occupant.

8. The apparatus of claim 1 further comprising:
a communication server communicatively connected to the communication device, for implementing a presence service for an occupant of the premises and for providing presence information about the occupant to the communication device; wherein
the communication device is adapted for displaying the provided presence information on the display screen and for providing to the server information entered via the user interface by a visitor; and
the server is adapted for displaying the entered information to the occupant.

9. A method comprising:
providing a client communication device in proximity to an entryway of a premises, the device comprising a user interface and a display screen;
providing a communication server connected to the device;
providing a presence service for an occupant of the premises;
the server providing presence information about the occupant from the presence service to the device;
the device responding to receipt of the provided presence information by displaying the received presence information on the display screen to a visitor of the premises;
the device responding to entry by the visitor of information via the user interface by providing the entered information to the server; and
the server responding to receipt of the provided information entered by the visitor by causing the received information to be displayed to the occupant.

10. The method of claim 9 wherein:
the presence information comprises at least one of whether the occupant is present on the premises, whether the occupant is busy or free, whether the occupant may or may not be disturbed, and calendar information of the occupant;
the device is adapted to display the presence information to the visitor via at least one of icons, an on-line text chat field, and a calendar display field;
the server is adapted to provide to the device icons selected by the occupant for display to the visitor;
the information entered by the visitor comprises at least one of an identity of the visitor, a purpose of the visit, and a type of interaction with the occupant desired by the visitor;
the server is adapted to display the entered information to the occupant via at least one of icons and an on-line text chat field; and
the device is adapted to provide icons selected by the visitor to the server for display to the occupant.
